# EUROPÄISCHE PATENTANMELDUNG

(11) **EP 4 549 323 A1**
(43) Veröffentlichungstag der Anmeldung: **07.05.2025**
(21) Anmeldenummer: 23207351.0
(22) Anmeldetag: 02.11.2023
(51) Int. Cl.: B64F 1/35, B64U 80/25

(54) **LADESYSTEM UND VERFAHREN ZUR KONTAKTIERUNG**

(71) Anmelder: Schunk Transit Systems GmbH, 35435 Wettenberg (DE)
(72) Erfinder: BRÜNINGK-WEISSHAR, Björn, 35510 Butzbach (DE); HENGSTERMANN, Thomas, 48432 Rheine (DE); HOSS, Christian, 35423 Lich (DE)
(74) Vertreter: advotec.

(57) **Zusammenfassung**

Die Erfindung betrifft ein Ladesystem (12) für elektrisch angetriebene Luftfahrzeuge, insbesondere bemanntes oder unbemanntes Luftfahrzeug, Flugzeug, Motorsegler, Helikopter (11), Luftschiff oder dergleichen, zur Ausbildung einer elektrisch leitenden Verbindung zwischen einem Luftfahrzeug (10) und einer stationären Ladestation, wobei das Ladesystem eine Kontaktvorrichtung (13) und eine Ladekontaktvorrichtung (15) umfasst, wobei die Ladekontaktvorrichtung mit der Kontaktvorrichtung in einer Kontaktposition elektrisch kontaktierbar ist, wobei die Kontaktvorrichtung Kontaktelemente (18) und die Ladekontaktvorrichtung Ladekontaktelemente (19) aufweist, wobei die Kontaktelemente in der Kontaktposition mit den Ladekontaktelementen jeweils zur Ausbildung von Kontaktpaarungen elektrisch kontaktierbar sind, wobei die Kontaktvorrichtung unterhalb eines Luftfahrzeugs anordbar ist, wobei die Ladekontaktvorrichtung an einem Untergrund (16) anordbar ist, auf dem das Luftfahrzeug abstellbar ist, wobei die Ladekontaktvorrichtung zumindest eine Sicherheitsvorrichtung aufweist, mittels der zumindest ein Ladekontaktelement abschirmbar und/oder spannungsfrei schaltbar ist. Weiter betrifft die Erfindung ein Verfahren zur Kontaktierung eines elektrisch angetriebenen Luftfahrzeugs.

## Beschreibung

Die Erfindung betrifft Ladesystem für elektrisch angetriebene Luftfahrzeuge, insbesondere bemanntes oder unbemanntes Luftfahrzeug, Flugzeug, Motorsegler, Helikopter, Luftschiff oder dergleichen, zur Ausbildung einer elektrisch leitenden Verbindung zwischen einem Luftfahrzeug und einer stationären Ladestation, wobei das Ladesystem eine Kontaktvorrichtung und eine Ladekontaktvorrichtung umfasst, wobei die Ladekontaktvorrichtung mit der Kontaktvorrichtung in einer Kontaktposition elektrisch kontaktierbar ist, wobei die Kontaktvorrichtung Kontaktelemente und die Ladekontaktvorrichtung Ladekontaktelemente aufweist, wobei die Kontaktelemente in der Kontaktposition mit den Ladekontaktelementen jeweils zur Ausbildung von Kontaktpaarungen elektrisch kontaktierbar sind. Weiter betrifft die Erfindung ein Verfahren zur Kontaktierung eines elektrisch angetriebenen Luftfahrzeugs mit einem Ladesystem.

Derartige Ladesysteme und Verfahren sind aus dem Stand der Technik bekannt und werden regelmäßig zum Laden von elektrisch angetriebenen Fahrzeugen eingesetzt. Diese Fahrzeuge können beispielsweise Kraftfahrzeuge oder dergleichen sein, die nicht permanent elektrisch mit einem Fahrdraht oder ähnlichem verbunden sind und über einen elektrischen Energiespeicher verfügen. Auch sind Luftfahrzeuge mit einem elektrischen Antrieb und einem elektrischen Energiespeicher bekannt, beispielsweise sogenannte Modellflugzeuge, Drohnen oder dergleichen. Hier kann ein Laden des Luftfahrzeugs regelmäßig dadurch erfolgen, dass beispielsweise der elektrische Energiespeicher bzw. ein Akkumulator des Luftfahrzeugs ausgetauscht und separat von dem Luftfahrzeug geladen wird. Weiter ist es bekannt, Luftfahrzeuge über eine kabelgebundene elektrische Verbindung, beispielsweise mit einer Stecker-Dose-Verbindung an ein Stromnetz bzw. eine Ladestation anzuschließen um das Luftfahrzeug zu laden. Insbesondere kleinere Luftfahrzeuge, wie Modellflugzeuge oder dergleichen, können leicht von einer Bedienperson befördert, gehandhabt und mit einer Kabelverbindung zum Laden versehen werden. Derartige Luftfahrzeuge benötigen auch vergleichsweise wenig elektrische Energie, so dass eine Ladespannung niedrig ist und keine besonderen Sicherheitsvorkehrungen erforderlich sind.

Vergleichsweise größere Luftfahrzeuge, wie beispielsweise bemannte Flugzeuge oder dergleichen, benötigen jedoch regelmäßig ebenfalls eine Verbindung mit einem Stromnetz, auch wenn diese Luftfahrzeuge mit einem Verbrennungsantrieb ausgestattet sind. Zur Herstellung dieser Stecker-Dose-Verbindung wird Bodenpersonal benötigt, welches ein Kabel zu dem Luftfahrzeug verlegt, wenn dies erforderlich ist. Dies wird jedoch als nachteilig empfunden, wenn das Luftfahrzeug autonom oder teilautonom betrieben werden soll, was insbesondere bei Luftfahrzeugen mit elektrischem Antrieb der Fall ist. Da bei Luftfahrzeugen mit elektrischem Antrieb eine Flugdauer vergleichsweise kürzer ist als bei Luftfahrzeugen mit Verbrennungsantrieb sind bei Luftfahrzeugen mit elektrischem Antrieb häufigere Stopps zum Aufladen des Luftfahrzeugs erforderlich. Darüber hinaus soll innerhalb kurzer Zeit eine Schnellladung von Akkumulatoren bzw. Batterien des Luftfahrzeugs erfolgen, weshalb hohe Ströme übertragen werden müssen. Es wäre daher erforderlich, entsprechend groß dimensionierte Leitungsverbindungen und Ladesysteme vorzusehen, die wiederum nur schwer handhabbar sind. Gleichzeitig müssen dann auch besondere Anforderungen an die elektrische Sicherheit zum Schutz des Bodenpersonals eingehalten werden.

Der vorliegenden Erfindung liegt daher die Aufgabe zugrunde, ein Ladesystem, ein Luftfahrzeug und ein Verfahren zur Kontaktierung eines elektrisch angetriebenen Luftfahrzeugs vorzuschlagen, welches einfach einsetzbar, sicher und kostengünstig ist.

Diese Aufgabe wird durch ein Ladesystem mit den Merkmalen des Anspruchs 1, ein Luftfahrzeug mit den Merkmalen des Anspruchs 23 und ein Verfahren mit den Merkmalen des Anspruchs 24 gelöst.

Das erfindungsgemäße Ladesystem für elektrisch angetriebene Luftfahrzeuge, insbesondere bemanntes oder unbemanntes Luftfahrzeug, Flugzeug, Motorsegler, Helikopter, Luftschiff oder dergleichen, umfasst zur Ausbildung einer elektrisch leitenden Verbindung zwischen einem Luftfahrzeug und einer stationären Ladestation eine Kontaktvorrichtung und eine Ladekontaktvorrichtung, wobei die Ladekontaktvorrichtung mit der Kontaktvorrichtung in einer Kontaktposition elektrisch kontaktierbar ist, wobei die Kontaktvorrichtung Kontaktelemente und die Ladekontaktvorrichtung Ladekontaktelemente aufweist, wobei die Kontaktelemente in der Kontaktposition mit den Ladekontaktelementen jeweils zur Ausbildung von Kontaktpaarungen elektrisch kontaktierbar sind, wobei die Kontaktvorrichtung unterhalb eines Luftfahrzeugs anordbar ist, wobei die Ladekontaktvorrichtung an einem Untergrund anordbar ist, auf dem das Luftfahrzeug abstellbar ist, wobei die Ladekontaktvorrichtung zumindest eine Sicherheitsvorrichtung aufweist, mittels der zumindest ein Ladekontaktelement abschirmbar und/oder spannungsfrei schaltbar ist.

Das erfindungsgemäße Ladesystem ist folglich zwischen einer Unterseite des Luftfahrzeugs, die dem Untergrund zugewandt ist, und dem Untergrund ausgebildet. Dabei ist vorgesehen, dass die Kontaktvorrichtung an dem Luftfahrzeug und die Ladekontaktvorrichtung an dem Untergrund angeordnet ist. Unter einem Untergrund wird hier ein fester Untergrund verstanden, auf dem das Luftfahrzeug gemäß seiner bestimmungsgemä-ßen Verwendung regelmäßig abgestellt wird, beispielsweise ein Vorfeld einer Rollbahn, eine Halle, ein Landeplatz oder dergleichen. Dadurch, dass die Kontaktvorrichtung an dem Luftfahrzeug angeordnet ist und die Ladekontaktvorrichtung an dem Untergrund, auf dem das Luftfahrzeug abgestellt werden kann, kann das Luftfahrzeug mit der Kontaktvorrichtung auf oder an der Ladekontaktvorrichtung abgestellt werden. Dadurch wird es möglich, bei dem Abstellen bzw. Parken des Luftfahrzeugs in einer Haltposition, die Kontaktvorrichtung mit der Ladekontaktvorrichtung so zusammenzuführen, dass elektrische Kontaktpaarungen ausgebildet werden. Dabei gelangen dann die Ladekontaktelemente mit den Kontaktelementen so zusammen, dass eine elektrisch leitende Verbindung zwischen der Kontaktvorrichtung und der Ladekontaktvorrichtung hergestellt und das Luftfahrzeug bzw. ein elektrischer Energiespeicher des Luftfahrzeugs geladen werden kann. Somit ist es nicht mehr erforderlich Bedienpersonal zum Laden des Luftfahrzeugs zur Verfügung zu stellen, wodurch Betriebskosten eingespart werden können. Durch die Sicherheitsvorrichtung wird das zumindest eine Ladekontaktelement abgeschirmt, beispielsweise wenn an dem Ladekontaktelement eine Spannung anliegt, und/oder die Sicherheitsvorrichtung schaltet das zumindest eine Ladekontaktelement spannungsfrei, beispielsweise wenn mit dem Ladekontaktelement keine Kontaktpaarung ausgebildet ist. So wird es dann auch möglich, vergleichsweise hohe Ströme bzw. Spannungen zur Übertragung der elektrischen Energie auf den Energiespeicher des Luftfahrzeugs zu nutzen, ohne dass eine Gefahr für Personen besteht. Hierdurch kann das Luftfahrzeug besonders schnell gefahrlos geladen werden. Ein Laden des Luftfahrzeugs kann dann auch automatisiert erfolgen. Dies ist prinzipiell unabhängig davon, ob das Luftfahrzeug bemannt oder unbemannt ist, autonom oder teilautonom verkehrt sowie Passagiere und/oder Waren transportiert. Insgesamt kann so ein Betrieb des Luftfahrzeugs wesentlich vereinfacht werden.

Die Kontaktvorrichtung kann zumindest eine Kontakteinrichtung mit zumindest zwei Kontaktelementen aufweisen, oder die Kontaktvorrichtung kann zumindest zwei Kontakteinrichtungen mit zumindest jeweils einem Kontaktelement aufweisen. Wenn die Kontaktvorrichtung eine Kontakteinrichtung mit zwei oder mehr Kontaktelementen aufweist, können über die eine Kontakteinrichtung zumindest zwei Phasen geleitet werden. Weiter können auch mehrere Kontakteinrichtungen mit jeweils zwei oder mehr Kontaktelementen vorgesehen sein. Alternativ kann die Kontaktvorrichtung mindestens zwei oder Kontakteinrichtungen aufweisen, wobei jede der Kontakteinrichtungen alleine ein Kontaktelement aufweist. Die Kontakteinrichtungen können dann räumlich voneinander beabstandet sein, beispielsweise an unterschiedlichen Orten unterhalb des Luftfahrzeugs, wobei über jede der Kontakteinrichtungen alleine eine Phase übertragen werden kann. In dem Fall, in dem eine Mehrzahl von Kontakteinrichtungen jeweils eine Mehrzahl von Kontaktelementen aufweist, kann ebenfalls eine örtliche Trennung der Kontakteinrichtungen vorgesehen sein.

Vorteilhaft kann die Kontaktvorrichtung an einem Fahrwerk bzw. Radfahrwerk, zumindest einem Schleifsporn, zumindest einer Aufsetzkufe oder zumindest einem Aufsetzfuß des Luftfahrzeugs ausgebildet sein. Die Kontaktvorrichtung kann dann in dem Fahrwerk, dem Schleifsporn, der Aufsetzkufe oder dem Aufsetzfuß integriert sein. Sofern die Kontaktvorrichtung eine Mehrzahl von Kontakteinrichtungen umfasst, können beispielsweise parallele Aufsetzkufen jeweils eine Kontakteinrichtung aufweisen. Beispielsweise können dann an den Aufsetzkufen Kontaktelemente ausgebildet sein, die voneinander elektrisch isoliert sind. Die Kontaktelemente können an dem Fahrwerk, dem Schleifsporn, der Aufsetzkufe oder dem Aufsetzfuß angeordnet oder in diesem integriert sein. Wenn das Kontaktelement an dem Fahrwerk, dem Schleifsporn, der Aufsetzkufe oder dem Aufsetzfuß integriert ist, kann dieses eine jeweilige Oberfläche des Fahrwerks, des Schleifsporns, der Aufsetzkufe oder des Aufsetzfußes ausbilden.

Die Ladekontaktvorrichtung kann zumindest eine Ladekontakteinrichtung mit zumindest zwei Ladekontaktelementen aufweisen, oder die Ladekontaktvorrichtung kann zumindest zwei Ladekontakteinrichtungen mit zumindest einem Ladekontakt aufweisen. Wenn die Ladekontaktvorrichtung zumindest eine Ladekontakteinrichtung mit zumindest zwei oder mehr Ladekontaktelementen aufweist, können über die zwei Ladekontaktelemente zwei Phasen geleitet werden. Alternativ kann die Ladekontaktvorrichtung mit zumindest zwei oder mehr Ladekontakteinrichtungen ausgebildet sein, die ihrerseits jeweils ein Ladekontaktelement aufweisen. Die Ladekontakteinrichtungen können dann räumlich voneinander getrennt an oder in dem Untergrund so angeordnet sein, dass über jede der Ladekontakteinrichtungen allein eine elektrische Phase geleitet werden kann. Eine Anordnung der Ladekontaktelemente bzw. der Ladekontakteinrichtungen kann vorteilhaft so gewählt sein, dass diese Anordnung stets auf eine am Luftfahrzeug befindliche Kontakteinrichtung abgestimmt ist und ein lagerichtiges Zusammenführen von Kontaktelementen und Ladekontaktelementen ermöglicht. Prinzipiell kann die Ladekontaktvorrichtung jedoch auch so beschaffen sein, dass an der Ladekontaktvorrichtung eine Anzahl unterschiedlicher Luftfahrzeuge mit jeweils unterschiedlichen Kontakteinrichtungen kontaktiert werden kann. Die Ladekontaktvorrichtung weist dann eine Mehrzahl von Ladekontakteinrichtungen auf, die durch Ihre Anordnung an dem Untergrund an einen jeweiligen Flugzeugtyp angepasst sein können.

Das Ladesystem kann ein Positioniervorrichtung umfassen, wobei mittels der Positioniervorrichtung die Kontaktvorrichtung relativ zur Ladekontaktvorrichtung in Längsrichtung und/oder Querrichtung positionierbar und in die Kontaktposition bringbar ist. Die Positioniervorrichtung kann in Art einer Schwinge, eines linearen Aktors, eines Pantografen oder dergleichen ausgebildet sein, derart, dass die Kontaktvorrichtung und die Ladekontaktvorrichtung mittels der Positioniervorrichtung relativ zueinander bewegt und in die Kontaktposition bzw. in eine Verwahrposition verbracht werden können. Dabei kann vorgesehen sein, dass die Positioniervorrichtung an dem Luftfahrzeug, d. h. zwischen dem Luftfahrzeug und der Kontaktvorrichtung, oder alternativ an oder in dem Untergrund, d.h. zwischen dem Untergrund und der Ladekontaktvorrichtung angeordnet ist. Dadurch ist es möglich die Kontaktvorrichtung bzw. die Positioniervorrichtung mit der Kontaktvorrichtung an einem unteren Boden des Luftfahrzeugs anzuordnen und erst dann in die Kontaktposition zu verbringen, wenn das Luftfahrzeug schon abgestellt ist. Ist keine Positioniervorrichtung vorhanden, ist es erforderlich, das Luftfahrzeug stets lagegenau zu positionieren bzw. abzustellen, so dass die Kontaktvorrichtung die Ladekontaktvorrichtung relativ zueinander fluchten. Sollte das Luftfahrzeug nicht derart positioniert sein, kann mit der Positioniervorrichtung eine Korrektur einer Lage der Kontaktvorrichtung bzw. der Ladekontaktvorrichtung vorgenommen werden, so dass diese dann fluchten. Diese Lagekorrektur kann auch schon während des Verbringens des Luftfahrzeugs in die Abstellposition vorgenommen werden.

Die Ladekontaktvorrichtung kann auch oder zumindest teilweise, bevorzugt vollständig, in dem Untergrund angeordnet sein. Die Ladekontaktvorrichtung kann dann so beschaffen sein, dass sie auf dem Untergrund, beispielsweise eines Flugplatzes, eines Landeplatzes oder einer Rollbahn angeordnet ist. Die Ladekontaktvorrichtung kann dann beispielsweise mittels Schrauben oder dergleichen einfach auf dem Untergrund befestigt sein. Hierdurch ist ein einfaches Nachrüsten bestehender Untergründe mit der Ladekontaktvorrichtung möglich. Optional kann vorgesehen sein, dass die Ladekontaktvorrichtung zumindest teilweise oder vollständig innerhalb des Untergrunds angeordnet ist. Die Ladekontaktvorrichtung kann dann den Untergrund ein Stück weit überragen. Dies ist insofern vorteilhaft, dass dann durch die Ladekontaktvorrichtung ein höherer Aufbau auf dem Untergrund vermieden wird. Die Ladekontaktvorrichtung kann so beschaffen sein, dass diese beispielsweise mit einem Fahrzeug überfahrbar ist. Daher kann die Ladekontaktvorrichtung auch vollständig in den Untergrund eingelassen sein. Die Ladekontaktvorrichtung schließt dann bündig mit dem Untergrund ab. Auch können die Ladekontaktelemente in den Untergrund versenkbar ausgebildet sein.

Die Kontaktelemente und/oder Ladekontaktelemente können federnd gelagert sein. Beispielsweise kann eine Feder an dem Kontaktelement bzw. dem Ladekontaktelement vorgesehen sein, welche eine Federkraft auf das Kontaktelement bzw. das Ladekontaktelement bewirkt. Eine federnde Lagerung des Kontaktelements kann durch eine einfache Druckfeder oder Zugfeder, insbesondere Spiralfeder, ausgeführt sein. Infolgedessen kann so ein Kontakt zwischen dem Kontaktelement und dem Ladekontaktelement unter einer Federvorspannung ausgebildet werden. So können dann auch eventuelle Bewegungen des Luftfahrzeugs während eines Ladevorgangs, beispielsweise während eines Be- und Entladens des Luftfahrzeugs, kompensiert werden und eine Unterbrechung der Kontaktpaarung verhindert werden. Die Kontaktelemente und/oder die Ladekontaktelemente können dann auch relativ zu einer Oberfläche der Kontaktvorrichtung bzw. der Ladekontaktvorrichtung in unterschiedlichen Höhen hervorstehen. So ist es möglich, bei der Ausbildung von zumindest zwei Kontaktpaarungen zwischen jeweils einem Kontaktelement und einem Ladekontaktelement eine definierte Reihenfolge bei der Herstellung der Kontaktpaarungen sicherzustellen. Bei einem Zusammenführen von Kontaktvorrichtungen und Ladekontaktvorrichtungen wird dann eine Kontaktreihenfolge zwangsläufig immer eingehalten und aufgrund der geometrischen Anordnung der Kontaktelemente relativ zu den Ladekontaktelementen sichergestellt. Eine unbeabsichtigte oder fehlerhafte Kontaktierung bzw. Ausbildung von Kontaktpaarungen kann so leicht verhindert werden.

Die Sicherheitsvorrichtung kann eine Abschalteinrichtung aufweisen, mittels der zumindest ein Ladekontaktelement abgeschaltet werden kann.

Wenn mit dem Ladekontaktelement keine Kontaktpaarung ausgebildet ist, kann die Abschalteinrichtung das Ladekontaktelement spannungsfrei schalten. Hierzu kann das Ladekontaktelement von der Abschalteinrichtung zur Detektion der Kontaktpaarung mit einer verhältnismäßig niedrigen Detektionsspannung beaufschlagt werden, die jedoch nicht zur Ladung des Fahrzeugs oder zur Beeinträchtigung von Personen geeignet ist. Selbst bei einer anliegenden Detektionsspannung ist das Ladekontaktelement daher im Sinne der Erfindung spannungsfrei geschaltet.

Mittels der Abschalteinrichtung kann eine Ausbildung der Kontaktpaarungen detektiert werden, wobei bei einer Ausbildung von sämtlichen Kontaktpaarungen eine elektrische Spannung an den Ladekontaktelementen mittels der Abschalteinrichtung ausgebildet werden kann, und wobei bei einer Unterbrechung von zumindest einer Kontaktpaarung eine elektrische Spannung an den Ladekontaktelementen mittels der Abschalteinrichtung spannungsfrei geschaltet werden kann. Dies bedeutet, dass Ladekontaktelemente auch gegenüber Personen exponiert sein können, wenn die Ladekontaktelemente nicht genutzt werden.

Die Sicherheitsvorrichtung kann zumindest eine Abschirmeinrichtung sein bzw. aufweisen, mittels der zumindest ein Ladekontaktelement, oder eine Mehrzahl von Ladekontaktelementen, abschirmbar ist. Dadurch, dass dann die Kontaktelemente und die Ladekontaktelemente von der Abschirmeinrichtung abgeschirmt werden, kann verhindert werden, dass Personen während eines Ladevorgangs an die Kontaktelemente oder Ladekontaktelemente gelangen. Unter der Abschirmeinrichtung wird jede Art von Einrichtung verstanden, die geeignet ist einen Zugang von Personen zu dem zumindest einen Ladekontaktelement oder der Mehrzahl von Ladekontaktelementen zu verhindern. In einer besonders einfachen Ausführungsform kann dies bereits eine Abschirmeinrichtung in Art eines Zauns oder dergleichen sein.

Die Abschirmeinrichtung kann durch zumindest eine Abdeckeinrichtung ausgebildet sein, mittels der zumindest ein Ladekontaktelement abgedeckt werden kann. Dadurch können die Ladekontaktelemente vor Verschmutzungen und Beschädigungen geschützt werden, wenn die Ladekontaktvorrichtung nicht genutzt wird. Darüber hinaus kann vorgesehen sein, dass die Abdeckeinrichtung das zumindest eine Ladekontaktelement auch dann abdeckt, wenn die Kontaktvorrichtung mit der Ladekontaktvorrichtung bestimmungsgemäß verbunden ist bzw. sich in der Kontaktposition befindet. So können sich in allen Fällen Personen dem Luftfahrzeug in einer Abstellposition nähern.

Die Abdeckeinrichtung kann in der Kontaktposition das Kontaktelement und das Ladekontaktelement abdecken. Die Abdeckeinrichtung kann dabei so beschaffen sein, dass die Abdeckeinrichtung zumindest zwei Abdeckelemente aufweist. Prinzipiell ist es aber auch möglich, dass die Abdeckeinrichtung alleine ein Abdeckelement aufweist. Wesentlich ist, dass die Abdeckeinrichtung in der Kontaktposition das Kontaktelement und das Ladekontaktelement so bedeckt bzw. abschirmt, dass es zu keinem Berührungskontakt mit Personen kommen kann. Die Abdeckeinrichtung kann dabei das Kontaktelement und das Ladekontaktelement auch so weit überdecken, dass diese vor Verschmutzung, Wasser oder dergleichen geschützt sind. Ein Ladevorgang kann so sicher durchgeführt werden. Dadurch wird es dann auch möglich über die Kontaktvorrichtung und die Ladekontaktvorrichtung einen Strom von 500 Ampère bis 1000 Ampère, vorzugsweise 800 Ampère bei einer Spannung von 750 Volt zu übertragen. Folglich kann eine Leistung von 375 Kilowatt bis 750 Kilowatt, vorzugsweise von 600 Kilowatt über die Kontaktvorrichtung und die Ladekontaktvorrichtung übertragen werden. So kann eine besonders schnelle Ladung des Luftfahrzeugs erfolgen, da hohe Ströme in kurzer Zeit übertragen werden können.

Die Abdeckeinrichtung kann zumindest zwei relativ zueinander bewegbare Abdeckelemente aufweisen, wobei die Abdeckelemente das Ladekontaktelement in einer Schließstellung der Abdeckeinrichtung abdecken können, wobei die Abdeckelemente das Ladekontaktelement in einer Öffnungsstellung der Abdeckeinrichtung zur Ausbildung der Kontaktpaarungen mit dem Kontaktelement freigeben können. Die Abdeckelemente können dann das Ladekontaktelement in der Schließstellung, d.h., wenn das Ladekontaktelement noch nicht mit dem Kontaktelement kontaktiert ist, vollständig bedecken bzw. abschirmen. Die Abdeckelemente überdecken dann das Ladekontaktelement so, dass Personen keinen Berührungskontakt mit dem Ladekontaktelement herstellen können. In der Öffnungsstellung können die Abdeckelemente das Ladekontaktelement aufdecken, d.h. so weit freigeben, dass das Ladekontaktelement von dem Kontaktelement kontaktiert werden kann. Die Abdeckelemente können im Wesentlichen gleichartig ausgebildet und relativ zueinander symmetrisch angeordnet sein.

Die Abdeckelemente können in der Schließstellung aneinander anliegen und relativ zueinander in entgegengesetzten Richtungen in die Öffnungsstellung bewegbar sein, wobei in der Öffnungsstellung zwischen den Abdeckelementen eine Führungsöffnung für die Kontakteinrichtung ausgebildet sein kann. Die Abdeckelemente können dabei beliebig ausgebildet sein, jedoch kann stets immer vorgesehen sein, dass die Abdeckelemente relativ zueinander so bewegbar sind, dass diese in der Schließstellung aneinander anliegen und zumindest das Ladekontaktelement überdecken. Werden die Abdeckelemente dann auseinander bewegt, kann in der Öffnungsstellung die Kontakteinrichtung bzw. ein Kontaktelement in die dann ausgebildete Führungsöffnung eingesetzt und mit einem Ladekontaktelement kontaktiert werden. Die Führungsöffnung kann dabei so ausgebildet sein, dass die Kontakteinrichtung in Richtung auf das betreffende Ladekontaktelement bewegt wird. Beispielsweise kann die Führungsöffnung dann V-förmig oder in Art eines Trichters ausgebildet sein. Eine lagegenaue Positionierung der Kontakteinrichtung gegenüber der Ladekontaktvorrichtung ist dann nicht mehr zwangsläufig erforderlich, da die Führungsöffnung die Kontakteinrichtung in Richtung auf die betreffenden Ladekontaktelemente leiten kann. Bei dem Einführen der Kontakteinrichtung in die Führungsöffnung kann diese dann entlang der Führungsöffnung bewegt werden bzw. gleiten. Hierbei ist jede Gestalt einer Führungsöffnung denkbar, die geeignet ist, die Kontakteinrichtung bei einer nicht lagegenauen Positionierung gegenüber der Ladekontaktvorrichtung im Laufe einer zusammenführenden Bewegung von Kontaktelement und Ladekontaktelement lagerichtig zu positionieren.

Das zumindest eine Ladekontaktelement kann an einem Abdeckelement oder von den Abdeckelementen beabstandet angeordnet sein. In einer Ausführungsform kann das Ladekontaktelement oder die Ladekontaktelemente von dem Abdeckelement abgedeckt werden, wenn das Ladekontaktelement gegenüberliegend dem Abdeckelement angeordnet ist und das Abdeckelement oberhalb des Ladekontaktelements zur Abdeckung desselben bewegt werden kann. In weiteren Ausführungsform kann vorgesehen sein, dass das Ladekontaktelement oder die Ladekontaktelemente an dem Abdeckelement befestigt ist bzw. sind. Das Abdeckelement deckt dann ebenfalls das Ladekontaktelement ab, wenn das Abdeckelement sich in der Schließstellung befindet. Wird das Abdeckelement in die Öffnungsstellung bewegt, kann das Ladekontaktelement derart exponiert werden, dass dieses dann von einem Kontaktelement kontaktiert werden kann. Vorzugsweise ist das Ladekontaktelement dann in der Schließstellung an einer einen Innenraum zugewandten Unterseite des Abdeckelements angeordnet.

Die Abdeckelemente können in der Schließstellung eine Haube ausbilden, die einen Aufnahmeraum für zumindest das Ladekontaktelement ausbilden kann. Die Haube kann das Ladekontaktelement dann überspannen. Weiter kann vorgesehen sein, dass die Haube auch das Kontaktelement bzw. die Kontakteinrichtung überspannt, wenn diese an dem Ladekontaktelement kontaktiert ist. Die Abdeckelemente können so beschaffen sein, dass der Aufnahmeraum das Ladekontaktelement allseitig umschließt. Weiter kann vorgesehen sein, dass die Haube einen Aufnahmeraum für eine Mehrzahl von Ladekontaktelementen ausbildet.

Die Abdeckelemente können jeweils Schenkel ausbilden, die um eine Achse schwenkbar angeordnet sein können. Durch die schwenkbare Anordnung der Schenkel können diese dann leicht in die Schließstellung und die Öffnungsstellung bewegt werden. Ein derartiger Bewegungsmechanismus ist einfach herstellbar und kann sicher betätigt werden. Die Schenkel können aus einem dielektrischen Material, beispielsweise einem Kunststoffmaterial ausgebildet sein. Die Achse kann an einem jeweiligen Ende der Schenkel angeordnet sein.

Die Abdeckeinrichtung kann zumindest einen Aktor, bevorzugt ein Federelement, aufweisen, mittels dem die Abdeckelemente in die Schließstellung bewegbar sind. Grundsätzlich ist es möglich, dass die Abdeckelemente mittels des Aktors automatisiert bewegt werden, d.h. mit Hilfe einer Steuervorrichtung bzw. Steuerung, die die Abdeckelemente in die Öffnungsstellung oder die Schließstellung positioniert. Der Aktor kann dann beispielsweise ein Elektromotor, Linearmotor, ein pneumatischer oder hydraulischer Kolben oder eine andere Art eines steuerbaren Aktors sein. Die Abdeckeinrichtung ist besonders einfach und kostengünstig herstellbar, wenn als Aktor ein Federelement verwendet wird. Das Federelement kann eine Druck- oder Zugfeder, Blattfeder, Kolbenfeder oder dergleichen sein. Das Federelement kann an verschiedenen Stellen der Abdeckeinrichtung angreifen. Beispielsweise kann das Federelement zwischen den beiden Abdeckelementen wirken, derart, dass die Abdeckelemente mittels einer Feder permanent in der Schließstellung gehalten werden. Werden die Abdeckelemente dann in die Öffnungsstellung bewegt, geschieht dies entgegen einer Federkraft des Federelements. Alternativ kann auch vorgesehen sein, dass jedes der Abdeckelemente jeweils ein Federelement aufweist, welches das jeweilige Abdeckelement in die Schließstellung bewegt. Beispielsweise kann hier an jedem Abdeckelement eine Schenkelfeder vorgesehen sein.

Die Abdeckelemente können an einer Außenseite jeweils mit einer Führungsfläche ausgebildet sein, die zusammen einen in Richtung auf das Ladekontaktelement sich verjüngenden Führungskanal für die Kontakteinrichtung ausbilden können, in den die Kontakteinrichtung eingeführt werden kann. An der dem Ladekontaktelement abgewandten Außenseite jedes der Abdeckelemente kann die Führungsfläche so ausgebildet sein, dass die Abdeckelemente zusammen einen V-förmigen Führungskanal für die Kontakteinrichtung ausbilden. Die jeweiligen Führungsflächen der Abdeckelemente verjüngen sich dann bzw. bilden eine Flucht für die Kontakteinrichtung derart aus, dass bei einem Einführen der Kontakteinrichtung bzw. Kontaktierung der Abdeckelemente mit der Kontakteinrichtung diese die Kontakteinrichtung entlang der jeweiligen Führungsfläche in Richtung auf das Ladekontaktelement führen. Die Führungsfläche kann dabei entlang des gesamten Abdeckelements oder auch nur abschnittsweise, beispielsweise als ein Vorsprung, Steg oder dergleichen ausgebildet sein.

Die Abdeckelemente können an einer Innenseite jeweils mit einer weiteren Führungsfläche ausgebildet sein, die zusammen einen in entgegengesetzter Richtung von dem Ladekontaktelement sich verjüngenden weiteren Führungskanal für die Kontakteinrichtung ausbilden können. Die Ausbildung des weiteren Führungskanals ist insbesondere dann von Vorteil, wenn die Abdeckelemente in der Schließstellung auch die Kontakteinrichtung abdecken. So kann dann sichergestellt werden, dass die Kontakteinrichtung wieder problemlos von dem Ladekontaktelement getrennt werden kann, ohne dass die Kontakteinrichtung an den Abdeckelementen hängen bleibt oder mit diesen in unerwünschter Weise kollidiert. Der weitere Führungskanal stellt dann sicher, dass die Abdeckelemente in die Öffnungsstellung bewegt werden und auch die Kontakteinrichtung in der gewünschten Richtung und Lage von dem Ladekontaktelement bzw. der Ladekontaktvorrichtung getrennt werden kann.

Bei einem Zusammenführen von Kontakteinrichtung und Ladekontakteinrichtung kann der Führungskanal eine Führung für die Kontakteinrichtung ausbilden, mittels der die Kontaktvorrichtung und die Ladekontaktvorrichtung in einer gemeinsamen Flucht positionierbar sind. Wenn der Führungskanal vergleichsweise lang ausgebildet ist, kann das Luftfahrzeug, wenn es sich in Richtung auf die Ladekontaktvorrichtung bewegt, mittels der Führung so lagerichtig positioniert werden, dass es die Kontaktvorrichtung in der gewünschten Weise relativ zur Ladekontaktvorrichtung ausrichtet. Dies kann beispielsweise dadurch erfolgen, dass die Kontaktvorrichtung mit der Ladekontaktvorrichtung fluchtet und nicht quer zu dieser ausgerichtet ist.

Der Berührungskontakt der Kontaktelemente mit den Ladekontaktelementen kann unterbunden werden, wenn die Kontaktvorrichtung und die Ladekontaktvorrichtung abweichend von der gemeinsamen Flucht positioniert sind. Sollte die Kontaktvorrichtung relativ zur Ladekontaktvorrichtung beispielsweise quer ausgerichtet sein, können die Abdeckelemente weiter in der Schließstellung verbleiben, um einen Kontakt eines Kontaktelements mit einem Ladekontaktelement oder anderen Bauteilen der Ladekontaktvorrichtung in unerwünschter Weise zu verhindern.

Das erfindungsgemäße Luftfahrzeug, insbesondere bemanntes oder unbemanntes Luftfahrzeug, Flugzeug, Motorsegler, Helikopter, Luftschiff oder dergleichen, ist elektrisch angetrieben, wobei das Luftfahrzeug ein erfindungsgemäßes Ladesystem aufweist. Weitere vorteilhafte Ausführungsformen des Luftfahrzeugs ergeben sich aus den Merkmalsbeschreibungen der auf den Vorrichtungsanspruch 1 rückbezogenen Unteransprüche.

Bei dem erfindungsgemäßen Verfahren zur Kontaktierung eines elektrisch angetriebenen Luftfahrzeugs, insbesondere bemanntes oder unbemanntes Luftfahrzeug, Flugzeug, Motorsegler, Helikopter, Luftschiff oder dergleichen, wird mittels einer Kontaktvorrichtung und einer Ladekontaktvorrichtung eines Ladesystems eine elektrisch leitende Verbindung zwischen einem Luftfahrzeug und einer stationären Ladestation ausgebildet, wobei die Ladekontaktvorrichtung mit der Kontaktvorrichtung in einer Kontaktposition elektrisch kontaktiert wird, wobei die Kontaktvorrichtung Kontaktelemente und die Ladekontaktvorrichtung Ladekontaktelemente aufweist, wobei die Kontaktelemente in der Kontaktposition mit den Ladekontaktelementen jeweils zur Ausbildung von Kontaktpaarungen elektrisch kontaktiert werden, wobei die Kontaktvorrichtung unterhalb eines Luftfahrzeugs angeordnet wird, wobei die Ladekontaktvorrichtung an einem Untergrund angeordnet wird, auf dem das Luftfahrzeug abgestellt wird, wobei mittels zumindest einer Sicherheitsvorrichtung der Ladekontaktvorrichtung zumindest ein Ladekontaktelement abgeschirmt und/oder spannungsfrei geschaltet wird. Zu den Vorteilen des erfindungsgemäßen Verfahrens wird auf die Vorteilsbeschreibung der erfindungsgemäßen Vorrichtung verwiesen.

Bei dem Abstellen des Luftfahrzeugs kann die Kontaktvorrichtung in Richtung der Ladekontaktvorrichtung bewegt werden und mit zumindest zwei Abdeckelementen einer Abdeckeinrichtung der Sicherheitsvorrichtung in Kontakt gelangen, die das Ladekontaktelement in einer Schließstellung der Abdeckeinrichtung abdecken können, wobei mittels der Bewegung der Kontaktvorrichtung in die Kontaktposition die Abdeckelemente relativ zueinander in eine Öffnungsstellung bewegt werden können und das Ladekontaktelement zur Ausbildung der Kontaktpaarung mit dem Kontaktelement freigegeben werden kann. Beispielsweise kann die Kontaktvorrichtung an oder durch eine Aufsetzkufe eines Helikopters ausgebildet sein, die bei einem Landeanflug eines Landeplatzes mit den zwei Abdeckelementen der Abdeckeinrichtung in Kontakt gelangt. Die Aufsetzkufe bewirkt dann eine Kraft auf die Abdeckelemente, die die Abdeckelemente von der Schließstellung in die Öffnungsstellung bewegt. Dabei wird das bzw. die Ladekontaktelemente freigegeben, so dass die Aufsetzkufe bzw. die Kontakteinrichtung mit den Kontaktelementen auf den Ladekontaktelementen aufsetzen und diese kontaktieren können. Gemäß einem weiteren Ausführungsbeispiel kann ein Ladekontakt dadurch hergestellt werden, dass die Kontaktvorrichtung an einem Fahrwerk bzw. Radfahrwerk eines Flugzeugs ausgebildet bzw. angeordnet ist. Das Flugzeug kann dann in Richtung der Ladekontaktvorrichtung rollen und das Fahrwerk kann mit den zwei Abdeckelementen der Abdeckeinrichtung in Kontakt gelangen, derart, dass das Fahrwerk eine Kraft auf die beiden Abdeckelemente bewirkt, die diese in die Öffnungsstellung bewegen. Auch hier kann dann eine Anzahl von Kontaktpaarungen zwischen Kontaktelementen und Ladekontaktelementen einfach und sicher ausgebildet werden.

Bei dem Abstellen des Luftfahrzeugs kann die Kontaktvorrichtung in Richtung der Ladekontaktvorrichtung bewegt werden, wobei die Kontaktelemente mit den Ladekontaktelementen in Kontakt gelangen können, wobei mittels einer Abschalteinrichtung der Sicherheitsvorrichtung eine Ausbildung der Kontaktpaarungen detektiert werden kann, wobei bei einer Ausbildung von sämtlichen Kontaktpaarungen eine elektrische Spannung an den Ladekontaktelementen mittels der Abschalteinrichtung ausgebildet werden kann, und wobei bei einer Unterbrechung von zumindest einer Kontaktpaarung eine elektrische Spannung an den Ladekontaktelementen mittels der Abschalteinrichtung spannungsfrei geschaltet werden kann. Hier können sämtliche für einen Ladevorgang erforderlichen Kontaktpaarungen zwischen Kontaktelementen und Ladekontaktelementen einfach und sicher ausgebildet werden. Eine Beaufschlagung der Ladekontaktelemente mit einer Ladespannung erfolgt nur dann, wenn die Ausbildung der Kontaktpaarungen von der Sicherheitsvorrichtung detektiert werden kann. Die Abschalteinrichtung ist zusammen mit der Abdeckeinrichtung verwendbar, um eine sehr hohe Sicherheit bei einem Ladevorgang zu erzielen.

Weitere vorteilhafte Ausführungsformen des Verfahrens ergeben sich aus den Merkmalsbeschreibungen der aus dem Vorrichtungsanspruch 1 rückbezogenen Unteransprüche.

Die Erfindung ist prinzipiell für jede Art von Luftfahrzeug nutzbar, welches mit Batterien betrieben wird, die nachgeladen werden müssen. Nachfolgend werden bevorzugte Ausführungsformen der Erfindung unter Bezugnahme auf die beigefügten Zeichnungen näher erläutert.

Es zeigen:
- **Fig. 1**: ein Luftfahrzeug mit einem Ladesystem gemäß einer ersten Ausführungsform bei einem Anflug;
- **Fig. 2**: das Luftfahrzeug aus **Fig. 1** während eines Ladens des Luftfahrzeugs mit dem Ladesystem;
- **Fig. 3**: ein Luftfahrzeug gemäß einer zweiten Ausführungsform während eines Ladens an einem Ladesystem;
- **Fig. 4a** bis **4c**: eine schematische Querschnittansicht eines Ladesystems gemäß einer dritten Ausführungsform während eines Kontaktierungsvorgangs;
- **Fig. 5**: eine schematische Querschnittansicht eines Ladesystems gemäß einer vierten Ausführungsform;
- **Fig. 6**: eine schematische Querschnittansicht eines Ladesystems gemäß einer fünften Ausführungsform;
- **Fig. 7**: eine schematische Querschnittansicht eines Ladesystems gemäß einer sechsten Ausführungsform;
- **Fig. 8**: eine schematische Querschnittansicht eines Ladesystems gemäß einer siebten Ausführungsform.

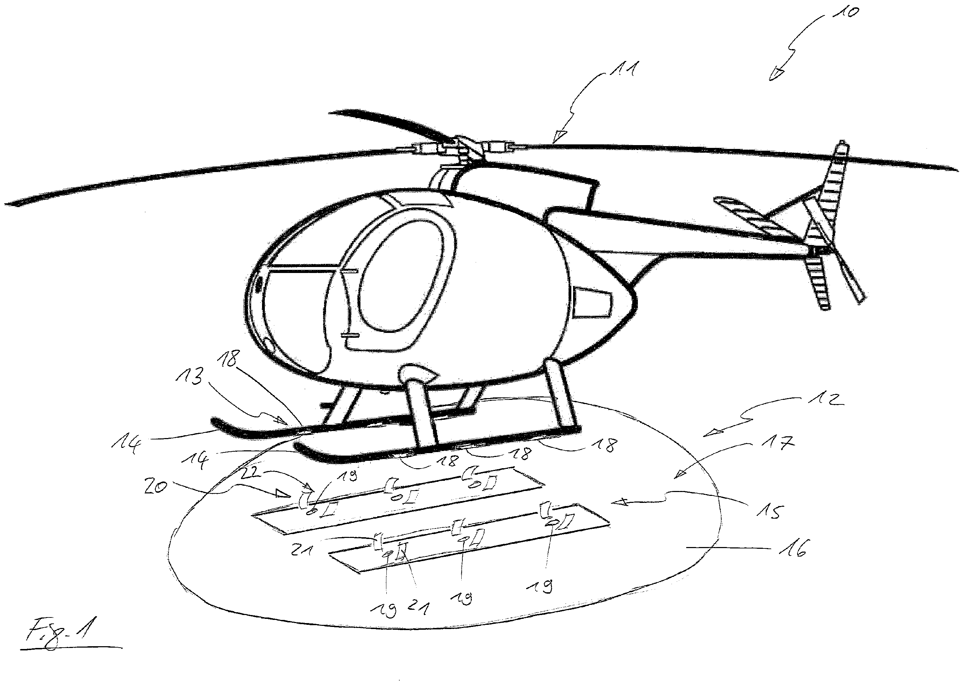

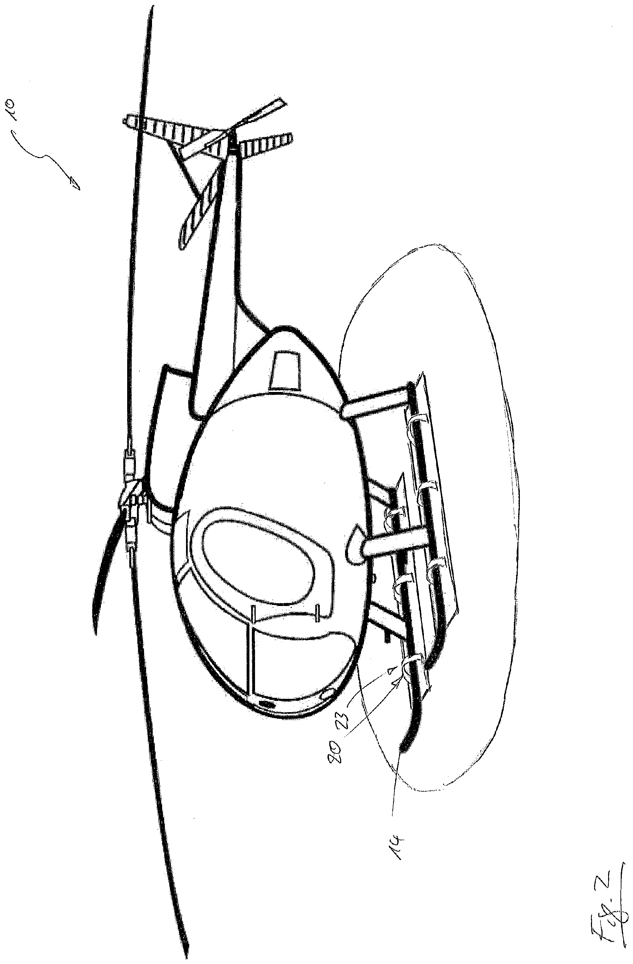

Eine Zusammenschau der **Fig. 1** und der **Fig. 2** zeigt ein Luftfahrzeug 10, welches durch einen Helikopter 11 gebildet ist und ein Ladesystem 12 mit einer Kontaktvorrichtung 13 an Aufsetzkufen 14 des Helikopters 11 und einer Ladekontaktvorrichtung 15 an einem Untergrund 16, der hier durch einen Landeplatz 17 ausgebildet ist. Die Kontaktvorrichtung 13 bzw. die Aufsetzkufen 14 weisen Kontaktelemente 18 und die Ladekontaktvorrichtung 15 Ladekontaktelemente 19 auf. Weiter weist die Ladekontaktvorrichtung 15 eine als Abdeckeinrichtung 20 ausgebildete Abschirmeinrichtung einer Sicherheitsvorrichtung auf, mittels der die Ladekontaktelemente 19 abdeckbar bzw. abschirmbar sind. Die hier nicht weiter dargestellte Sicherheitsvorrichtung kann ergänzend mit einer Abschalteinrichtung ausgestattet sein. Die Ladekontaktvorrichtung 15 verfügt über jeweils einem Ladekontaktelement 19 zugeordnete Abdeckeinrichtungen 20, die ihrerseits jeweils aus zwei Abdeckelementen 21 gebildet sind. Die Abdeckelemente 21 sind relativ zueinander bewegbar und können von einer in der **Fig. 1** dargestellten Öffnungsstellung 22 in eine in der **Fig. 2** gezeigten Schließstellung 23 bewegt werden.

Hier ist vorgesehen die Abdeckelemente 21 auch dann in die Schließstellung 23 zu bewegen, wenn sich kein Helikopter 11 in einem Landeanflug befindet. Die Öffnungsstellung 22 wird nur dann bereitgestellt, wenn der Helikopter 11 sich dem Untergrund 16 bzw. der Ladekontaktvorrichtung 15 nähert. Eine Bewegung der Abdeckelemente 21 in die Öffnungsstellung 22 kann dabei durch eine hier nicht dargestellte Steuervorrichtung herbeigeführt werden. Die Steuervorrichtung kann auch eine drahtlose Funk- oder Datenverbindung zwischen der Kontaktvorrichtung 13 und der Ladekontaktvorrichtung 15 oder eine Sensoreinrichtung umfassen, mittels der eine Annäherung des Helikopters 11 detektiert werden kann. Wesentlich ist, dass in der Schließstellung 23 ein Laden des Helikopters 11 erfolgen kann, da dann die Kontaktelemente 18 mit den Ladekontaktelementen 19 kontaktiert sind. Hierbei kann der Helikopter 11 von Personen verlassen oder bestiegen werden, ohne dass eine Gefahr für die Personen durch das Ladesystem 12 besteht, da die Abdeckelemente 21 keinen Zugang zu den Kontaktelementen 18 bzw. Ladekontaktelementen 19 ermöglichen. Weiter kann auf Bedienpersonal zum Laden des Helikopters 11 verzichtet werden.

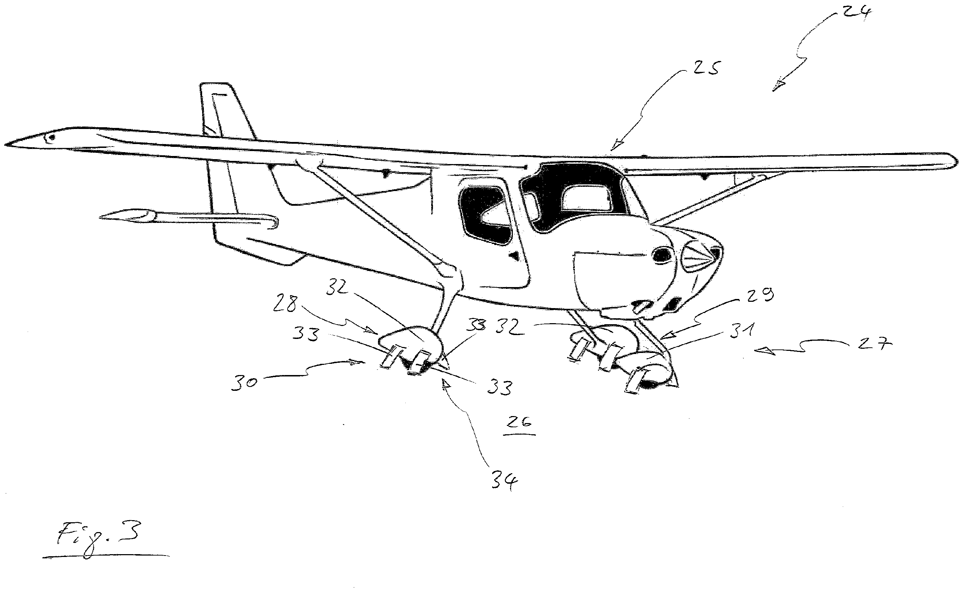

Die **Fig. 3** zeigt ein Luftfahrzeug 24, welches hier durch ein Flugzeug 25 gebildet ist. Das Flugzeug 25 befindet sich auf einem Untergrund 26 und wird über ein Ladesystem 27 geladen. Das Ladesystem 27 ist durch eine Kontaktvorrichtung 28 an einem Fahrwerk 29 des Flugzeugs 25 und eine Ladekontaktvorrichtung 30 an dem Untergrund 26 gebildet. An dem Fahrwerk 29 bzw. dem jeweiligen Radfahrwerk 31 und 32 sind hier nicht dargestellte Kontaktelemente angeordnet. Die Ladekontaktvorrichtung 30 umfasst Abdeckelemente 33, an denen hier nicht dargestellte Ladekontaktelemente angeordnet sind, die ihrerseits mit den Kontaktelementen kontaktiert sind. Die Abdeckelemente 33 sind bewegbar ausgebildet und befinden sich in der hier gezeigten Darstellung in einer Öffnungsstellung 34, in der das Laden des Flugzeugs 25 durchgeführt wird.

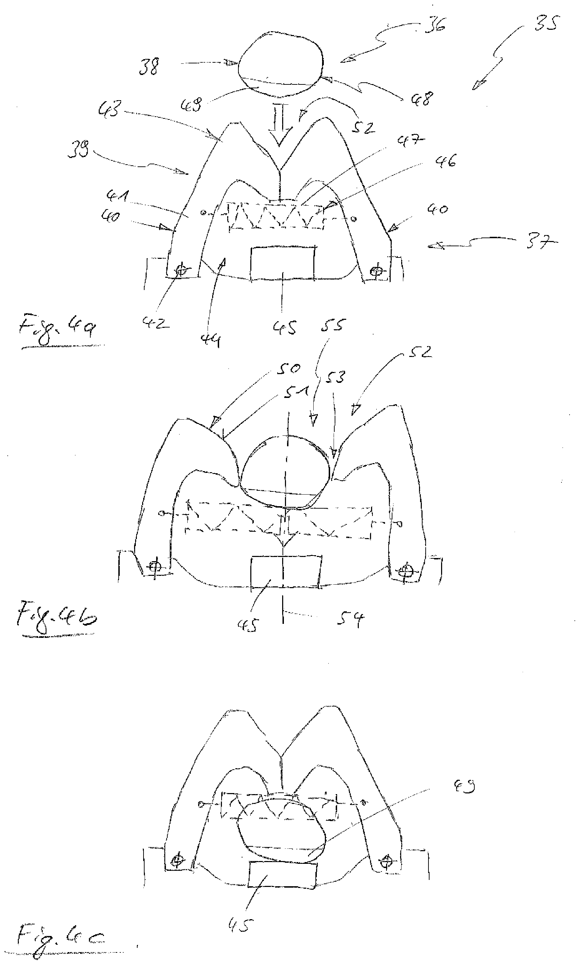

Eine Zusammenschau der **Fig. 4a** bis **Fig. 4c** zeigt eine schematische Darstellung eines Ladesystem 35 in einer Querschnittansicht und in verschiedenen Positionen während eines Kontaktierungsvorgangs. Das Ladesystem 35 umfasst eine Kontaktvorrichtung 36 und eine Ladekontaktvorrichtung 37, die an einem hier nicht näher dargestellten Untergrund angeordnet ist. Die Kontaktvorrichtung 36 ist durch eine Aufsetzkufe 38 eines nicht näher dargestellten Luftfahrzeugs gebildet. Die Ladekontaktvorrichtung 37 weist eine als Abdeckeinrichtung 39 ausgebildete Abschirmeinrichtung einer Sicherheitsvorrichtung mit zwei relativ zueinander bewegbaren Abdeckelementen 40 auf, die Schenkel 41 ausbilden, die ihrerseits um eine Achse 42 schwenkbar angeordnet sind. Die Abdeckelemente 40 bilden eine Haube 43 aus, die einen Aufnahmeraum 44 für Ladekontaktelemente 45 der Ladekontaktvorrichtung 37 bildet. Weiter ist ein Federelement 46, welches durch eine Zugfeder 47 gebildet ist, vorgesehen, die die Abdeckelemente 40 aneinander anliegend positioniert. Die Aufsetzkufe 38 bildet eine Kontakteinrichtung 48 der Kontaktvorrichtung 36 mit Kontaktelementen 49 aus.

Bei einem Landevorgang eines hier nicht dargestellten Luftfahrzeugs mit der Aufsetzkufe 38 wird, wie in **Fig. 4a** dargestellt, die Aufsetzkufe 37 der Ladekontaktvorrichtung 37 angenähert. Die Abdeckelemente 40 bilden an ihrer Außenseite 50 jeweils eine Führungsfläche 51 aus, die ihrerseits einen in Richtung auf das Ladekontaktelement 45 sich verjüngenden Führungskanal 52 für die Kontakteinrichtung 48 bzw. die Aufsetzkufe 38 ausbildet. Der Führungskanal 52 hat hier eine V-förmige Gestalt, die eine Zentrierung der Aufsetzkufe 3 8 in dem Führungskanal 52 derart ermöglicht, dass eine Führung 53 zwischen Aufsetzkufe 38 und Abdeckeinrichtung 39 ausgebildet ist, die die Aufsetzkufe 38 und die Ladekontaktelemente 45 in einer gemeinsamen Flucht 54 positioniert.

Wie aus **Fig. 4b** ersichtlich ist, bewirkt die Aufsetzkufe 38 eine Kraft auf die Abdeckelemente 40 derart, dass diese um die Achsen 42 entgegen der Federkraft der Zugfeder 47 nach außen verschwenkt werden, so dass eine Führungsöffnung 55 für die Aufsetzkufe 38 ausgebildet wird. Gemäß **Fig. 4c** gelangt dann das Kontaktelement 49 an das Ladekontaktelement 45, so dass ein elektrischer Kontakt ausgebildet wird. Die Abdeckelemente 40 werden dann mittels der Zugfeder 47 wieder in ihre Ausgangsposition bewegt und decken die Aufsetzkufe 38 im Bereich des Kontaktelements 49 ab. So können auch keine Personen während eines Ladevorgangs an das Kontaktelement 49 bzw. das Ladekontaktelement 45 gelangen, wodurch ein Ladevorgang sicher ausführbar ist. Die hier nicht weiter dargestellte Sicherheitsvorrichtung kann ergänzend mit einer Abschalteinrichtung ausgestattet sein.

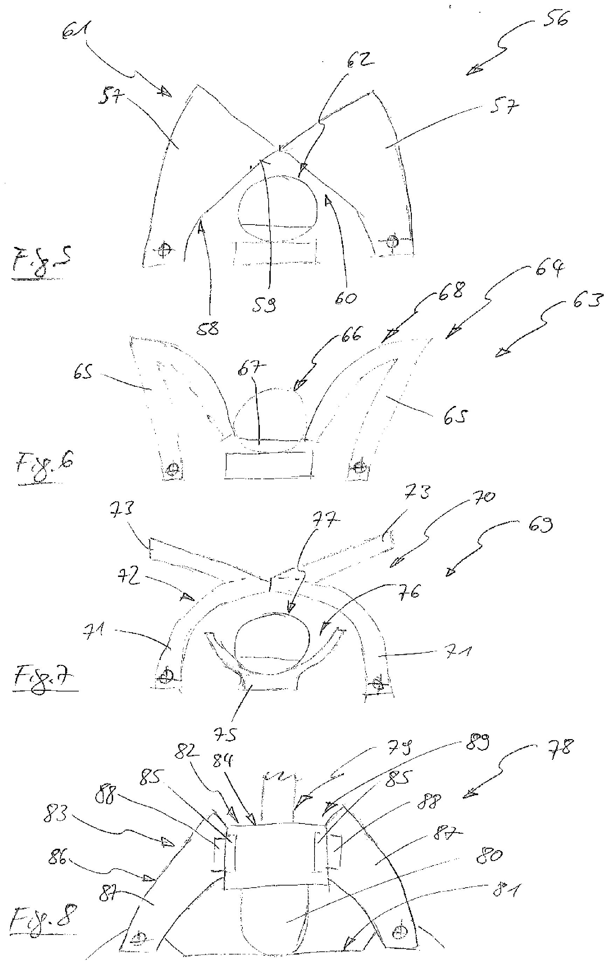

Die **Fig. 5** zeigt eine schematische Schnittdarstellung eines Ladesystems 56, bei dem im Unterschied zum Ladesystem aus **Fig. 4** Abdeckelemente 57 einer als Abdeckeinrichtung 61 ausgebildeten Abschirmeinrichtung einer Sicherheitsvorrichtung an einer Innenseite 58 jeweils mit einer weiteren Führungsfläche 59 ausgebildet sind. Die weiteren Führungsflächen 59 bilden einen weiteren Führungskanal 60 aus, der eine Öffnung der mit den Abdeckelementen 57 ausgebildeten Abdeckeinrichtung 61 erlaubt, wenn eine Aufsetzkufe 62 infolge eines Abhebens eines Luftfahrzeugs aus der Abdeckeinrichtung 61 wieder entfernt wird. Die hier nicht weiter dargestellte Sicherheitsvorrichtung kann ergänzend mit einer Abschalteinrichtung ausgestattet sein.

Die **Fig. 6** zeigt ein Ladesystem 63, bei dem im Unterschied zum Ladesystem aus **Fig. 4** eine als Abdeckeinrichtung 64 ausgebildete Abschirmeinrichtung einer Sicherheitsvorrichtung mit Abdeckelementen 65 vorgesehen ist, die in einer Kontaktposition eine Aufsetzkufe 66 nicht vollständig überdecken, sondern lediglich ein Kontaktelement 67 und so während eines Ladevorgangs in einer Öffnungsstellung 68 verbleiben. Die hier nicht weiter dargestellte Sicherheitsvorrichtung kann ergänzend mit einer Abschalteinrichtung ausgestattet sein.

Die **Fig. 7** zeigt ein Ladesystem 69, welches im Unterschied zum Ladesystem aus der **Fig. 4** eine als Abdeckeinrichtung 70 ausgebildete Abschirmeinrichtung mit Abdeckelementen 71 aufweist, die an einer Außenseite 72 mit Fortsätzen 73 ausgebildet sind. Die Fortsätze 73 bilden wiederum eine streifenförmige Führungsfläche 74 aus. Ein Ladekontaktelement 75 ist hier mit einem rinnenförmigen Aufnahmeraum 76 für eine Aufsetzkufe 77 ausgebildet. Die hier nicht weiter dargestellte Sicherheitsvorrichtung kann ergänzend mit einer Abschalteinrichtung ausgestattet sein.

Die **Fig. 8** zeigt ein Ladesystem 78 für ein hier nicht dargestelltes Luftfahrzeug mit einem Radfahrwerk 79. Ein Rad 80 des Radfahrwerks 79 gelangt durch Rollen über einen Untergrund 81 an eine Ladekontaktvorrichtung 83 des Ladesystems 78, welches weiter durch eine Kontaktvorrichtung 82 und ausgebildet ist. Die Kontaktvorrichtung 82 weist eine Kontakteinrichtung 84 mit Kontaktelementen 85 auf, die sich längsseits des Rads 80 befinden. Die Ladekontaktvorrichtung 83 ist durch eine als Abdeckeinrichtung 86 ausgebildete Abschirmeinrichtung einer Sicherheitsvorrichtung mit zwei Abdeckelementen 87 gebildet. Die Abdeckelemente 87 weisen hier jeweils ein Ladekontaktelement 88 auf. In der hier gezeigten Öffnungsstellung 89 ist das Radfahrwerk 79 so an die Ladekontaktvorrichtung 83 heranbewegt worden, dass die Abdeckelemente 87 auseinander bewegt wurden und die Ladekontaktelemente 88 mit den Kontaktelementen 85 kontaktiert sind. Die hier nicht weiter dargestellte Sicherheitsvorrichtung kann ergänzend mit einer Abschalteinrichtung ausgestattet sein.

## Patentansprüche

1. Ladesystem (12, 27, 35, 56, 63, 69, 78) für elektrisch angetriebene Luftfahrzeuge, insbesondere bemanntes oder unbemanntes Luftfahrzeug, Flugzeug (25), Motorsegler, Helikopter (11), Luftschiff oder dergleichen, zur Ausbildung einer elektrisch leitenden Verbindung zwischen einem Luftfahrzeug (10, 24) und einer stationären Ladestation, wobei das Ladesystem eine Kontaktvorrichtung (13, 28, 36, 82) und eine Ladekontaktvorrichtung (15, 30, 37, 83) umfasst, wobei die Ladekontaktvorrichtung mit der Kontaktvorrichtung in einer Kontaktposition elektrisch kontaktierbar ist, wobei die Kontaktvorrichtung Kontaktelemente (18, 49, 67, 85) und die Ladekontaktvorrichtung Ladekontaktelemente (19, 45, 75, 88) aufweist, wobei die Kontaktelemente in der Kontaktposition mit den Ladekontaktelementen jeweils zur Ausbildung von Kontaktpaarungen elektrisch kontaktierbar sind,
**dadurch gekennzeichnet,**
**dass** die Kontaktvorrichtung unterhalb eines Luftfahrzeugs anordbar ist, wobei die Ladekontaktvorrichtung an einem Untergrund (16, 26, 81) anordbar ist, auf dem das Luftfahrzeug abstellbar ist, wobei die Ladekontaktvorrichtung zumindest eine Sicherheitsvorrichtung aufweist, mittels der zumindest ein Ladekontaktelement abschirmbar und/oder spannungsfrei schaltbar ist.

2. Ladesystem nach Anspruch 1,
**dadurch gekennzeichnet,**
**dass** die Kontaktvorrichtung (13, 28, 36, 82) zumindest eine Kontakteinrichtung (48, 84) mit zumindest zwei Kontaktelementen (18, 49, 67, 85) aufweist, oder dass die Kontaktvorrichtung zumindest zwei Kontakteinrichtungen mit zumindest jeweils einem Kontaktelement aufweist.

3. Ladesystem nach Anspruch 1 oder 2,
**dadurch gekennzeichnet,**
**dass** die Kontaktvorrichtung (28, 82) an einem Fahrwerk (29), zumindest einem Schleifsporn, zumindest einer Aufsetzkufe (14, 38, 62, 66, 77) oder zumindest einem Aufsetzfuß des Luftfahrzeugs (10, 24) ausgebildet ist.

4. Ladesystem nach einem der vorangehenden Ansprüche,
**dadurch gekennzeichnet,**
**dass** die Ladekontaktvorrichtung (15, 30, 37, 83) zumindest eine Ladekontakteinrichtung mit zumindest zwei Ladekontaktelementen (19, 45, 75, 88) aufweist, oder dass die Ladekontaktvorrichtung zumindest zwei Ladekontakteinrichtungen mit zumindest einem Ladekontaktelement aufweist.

5. Ladesystem nach einem der vorangehenden Ansprüche,
**dadurch gekennzeichnet,**
**dass** das Ladesystem eine Positioniervorrichtung umfasst, wobei mittels der Positioniervorrichtung die Kontaktvorrichtung relativ zur Ladekontaktvorrichtung in Längsrichtung und/oder Querrichtung positionierbar und in die Kontaktposition bringbar ist.

6. Ladesystem nach einem der vorangehenden Ansprüche,
**dadurch gekennzeichnet,**
**dass** die Ladekontaktvorrichtung (15, 30, 37, 83) auf oder zumindest teilweise, bevorzugt vollständig, in dem Untergrund (16, 26, 81) anordbar ist.

7. Ladesystem nach einem der vorangehenden Ansprüche,
**dadurch gekennzeichnet,**
**dass** die Kontaktelemente (18, 49, 67, 85) und/oder die Ladekontaktelemente (19, 45, 75, 88) federnd gelagert sind.

8. Ladesystem nach einem der vorangehenden Ansprüche,
**dadurch gekennzeichnet,**
**dass** die Sicherheitsvorrichtung eine Abschalteinrichtung aufweist, mittels der zumindest ein Ladekontaktelement (19, 45, 75, 88) abschaltbar ist.

9. Ladesystem nach Anspruch 8,
**dadurch gekennzeichnet,**
**dass** mittels der Abschalteinrichtung eine Ausbildung der Kontaktpaarungen detektierbar ist, wobei bei einer Ausbildung von sämtlichen Kontaktpaarungen eine elektrische Spannung an den Ladekontaktelementen (19, 45, 75, 88) mittels der Abschalteinrichtung ausbildbar ist, und wobei bei einer Unterbrechung von zumindest einer Kontaktpaarung eine elektrische Spannung an den Ladekontaktelementen mittels der Abschalteinrichtung spannungsfrei schaltbar ist.

10. Ladesystem nach einem der vorangehenden Ansprüche,
**dadurch gekennzeichnet,**
**dass** die Sicherheitsvorrichtung zumindest eine Abschirmeinrichtung aufweist, mittels der zumindest ein Ladekontaktelement abschirmbar ist.

11. Ladesystem nach Anspruch 10,
**dadurch gekennzeichnet,**
**dass** die Abschirmeinrichtung durch zumindest eine Abdeckeinrichtung (20, 39, 61, 64, 70, 86) ausgebildet ist, mittels der zumindest ein Ladekontaktelement (19, 45, 75, 88) abdeckbar ist.

12. Ladesystem nach Anspruch 11,
**dadurch gekennzeichnet,**
**dass** die Abdeckeinrichtung (20, 39, 61, 64, 70, 86) in der Kontaktposition, das Kontaktelement (18, 49, 67, 85) und das Ladekontaktelement (19, 45, 75, 88) abdeckt.

13. Ladesystem nach Anspruch 11 oder 12,
**dadurch gekennzeichnet,**
**dass** die Abdeckeinrichtung (20, 39, 61, 64, 70, 86) zumindest zwei relativ zueinander bewegbare Abdeckelemente (21, 33, 40, 57, 65, 71, 87) aufweist, wobei die Abdeckelemente das Ladekontaktelement (19, 45, 75, 88) in einer Schließstellung (23) der Abdeckeinrichtung abdecken, wobei die Abdeckelemente das Ladekontaktelement in einer Öffnungsstellung (22, 34, 68, 89) der Abdeckeinrichtung zur Ausbildung der Kontaktpaarung mit dem Kontaktelement (18, 49, 67, 85) freigeben.

14. Ladesystem nach Anspruch 13,
**dadurch gekennzeichnet,**
**dass** die Abdeckelemente (21, 33, 40, 57, 65, 71, 87) in der Schließstellung (23) aneinander anliegen und relativ zueinander in entgegengesetzten Richtungen in die Öffnungsstellung (22, 34, 68, 89) bewegbar sind, wobei in der Öffnungsstellung zwischen den Abdeckelementen eine Führungsöffnung (55) für die Kontakteinrichtung (48, 84) ausgebildet ist.

15. Ladesystem nach Anspruch 13 oder 14,
**dadurch gekennzeichnet,**
**dass** das zumindest eine Ladekontaktelement (19, 45, 75, 88) an einem Abdeckelement (21, 33, 40, 57, 65, 71, 87) oder von den Abdeckelementen beabstandet angeordnet ist.

16. Ladesystem nach einem der Ansprüche 13 bis 15,
**dadurch gekennzeichnet,**
**dass** die Abdeckelemente (21, 33, 40, 57, 65, 71, 87) in der Schließstellung (23) eine Haube (43) ausbilden, die einen Aufnahmeraum (44) für zumindest das Ladekontaktelement (19, 45, 75, 88) ausbildet.

17. Ladesystem nach einem der Ansprüche 13 bis 16,
**dadurch gekennzeichnet,**
**dass** die Abdeckelemente (21, 33, 40, 57, 65, 71, 87) jeweils Schenkel (41) ausbilden, die um eine Achse (42) schwenkbar angeordnet sind.

18. Ladesystem nach einem der Ansprüche 13 bis 17,
**dadurch gekennzeichnet,**
**dass** die Abdeckeinrichtung (20, 39, 61, 64, 70, 86) zumindest einen Aktor, bevorzugt ein Federelement (46), aufweist, mittels dem die Abdeckelemente (21, 33, 40, 57, 65, 71, 87) in die Schließstellung (23) bewegbar sind.

19. Ladesystem nach einem der Ansprüche 13 bis 18,
**dadurch gekennzeichnet,**
**dass** die Abdeckelemente (21, 33, 40, 57, 65, 71, 87) an einer Außenseite (50, 72)jeweils mit einer Führungsfläche (51, 74) ausgebildet sind, die zusammen einen in Richtung auf das Ladekontaktelement (19, 45, 75, 88) sich verjüngenden Führungskanal (52) für die Kontakteinrichtung (48, 84) ausbilden, in den die Kontakteinrichtung einführbar ist.

20. Ladesystem nach Anspruch 19,
**dadurch gekennzeichnet,**
**dass** die Abdeckelemente (21, 33, 40, 57, 65, 71, 87) an einer Innenseite (58) jeweils mit einer weiteren Führungsfläche (59) ausgebildet sind, die zusammen einen in entgegengesetzter Richtung von dem Ladekontaktelement (19, 45, 75, 88) sich verjüngenden weiteren Führungskanal (60) für die Kontakteinrichtung (48, 84) ausbilden.

21. Ladesystem nach Anspruch 19 oder 20,
**dadurch gekennzeichnet,**
**dass** bei einem Zusammenführen von Kontakteinrichtung (48, 84) und Ladekontakteinrichtung der Führungskanal (52) eine Führung (53) für die Kontakteinrichtung ausbildet, mittels der die Kontaktvorrichtung (13, 28, 36, 82) und die Ladekontaktvorrichtung (15, 30, 37, 83) in einer gemeinsamen Flucht (54) positionierbar sind.

22. Ladesystem nach Anspruch 21,
**dadurch gekennzeichnet,**
**dass** der Berührungskontakt der Kontaktelemente (18, 49, 67, 85) mit den Ladekontaktelementen (19, 45, 75, 88) unterbunden wird, wenn die Kontaktvorrichtung (13, 28, 36, 82) und die Ladekontaktvorrichtung (15, 30, 37, 83) abweichend von der gemeinsamen Flucht (54) positioniert sind.

23. Luftfahrzeug (10, 24), insbesondere bemanntes oder unbemanntes Luftfahrzeug, Flugzeug (25), Motorsegler, Helikopter (11), Luftschiff oder dergleichen, wobei das Luftfahrzeug elektrisch angetrieben ist, wobei das Luftfahrzeug ein Ladesystem (12, 27, 35, 56, 63, 69, 78) nach einem der vorangehenden Ansprüche aufweist.

24. Verfahren zur Kontaktierung eines elektrisch angetriebenen Luftfahrzeugs (10, 24), insbesondere bemanntes oder unbemanntes Luftfahrzeug, Flugzeug (25), Motorsegler, Helikopter (11), Luftschiff oder dergleichen,
wobei mittels einer Kontaktvorrichtung (13, 28, 36, 82) und einer Ladekontaktvorrichtung (15, 30, 37, 83) eines Ladesystems (12, 27, 35, 56, 63, 69, 78) eine elektrisch leitende Verbindung zwischen einem Luftfahrzeug und einer stationären Ladestation ausgebildet wird, wobei die Ladekontaktvorrichtung mit der Kontaktvorrichtung in einer Kontaktposition elektrisch kontaktiert wird, wobei die Kontaktvorrichtung Kontaktelemente (18, 49, 67, 85) und die Ladekontaktvorrichtung Ladekontaktelemente (19, 45, 75, 88) aufweist, wobei die Kontaktelemente in der Kontaktposition mit den Ladekontaktelementen jeweils zur Ausbildung von Kontaktpaarungen elektrisch kontaktiert werden,
**dadurch gekennzeichnet,**
**dass** die Kontaktvorrichtung unterhalb eines Luftfahrzeugs angeordnet wird, wobei die Ladekontaktvorrichtung an einem Untergrund (16, 26, 81) angeordnet wird, auf dem das Luftfahrzeug abgestellt wird, wobei mittels zumindest einer Sicherheitsvorrichtung der Ladekontaktvorrichtung zumindest ein Ladekontaktelement abgeschirmt und/oder spannungsfrei geschaltet wird.

25. Verfahren nach Anspruch 24,
**dadurch gekennzeichnet,**
**dass** bei dem Abstellen des Luftfahrzeugs (10, 24) die Kontaktvorrichtung (13, 28, 36, 82) in Richtung der Ladekontaktvorrichtung (15, 30, 37, 83) bewegt wird und mit zumindest zwei Abdeckelementen (21, 33, 40, 57, 65, 71, 87) einer Abdeckeinrichtung (20, 39, 61, 64, 70, 86) der Sicherheitsvorrichtung in Kontakt gelangt, die das Ladekontaktelement (19, 45, 75, 88) in einer Schließstellung (23) der Abdeckeinrichtung abdecken, wobei mittels der Bewegung der Kontaktvorrichtung in die Kontaktposition die Abdeckelemente relativ zueinander in eine Öffnungsstellung (22, 34, 68, 89) bewegt werden und das Ladekontaktelement zur Ausbildung der Kontaktpaarung mit dem Kontaktelement freigegeben wird.

26. Verfahren nach Anspruch 24 oder 25,
**dadurch gekennzeichnet,**
**dass** bei dem Abstellen des Luftfahrzeugs (10, 24) die Kontaktvorrichtung (13, 28, 36, 82) in Richtung der Ladekontaktvorrichtung (15, 30, 37, 83) bewegt wird, wobei die Kontaktelemente (18, 49, 67, 85) mit den Ladekontaktelementen (19, 45, 75, 88) in Kontakt gelangen, wobei mittels einer Abschalteinrichtung der Sicherheitsvorrichtung eine Ausbildung der Kontaktpaarungen detektiert wird, wobei bei einer Ausbildung von sämtlichen Kontaktpaarungen eine elektrische Spannung an den Ladekontaktelementen mittels der Abschalteinrichtung ausgebildet wird, und wobei bei einer Unterbrechung von zumindest einer Kontaktpaarung eine elektrische Spannung an den Ladekontaktelementen mittels der Abschalteinrichtung spannungsfrei geschaltet wird.
